(19) Europäisches Patentamt / European Patent Office / Office européen des brevets

(11) **EP 1 914 216 A1**

(12) **EUROPEAN PATENT APPLICATION**
published in accordance with Art. 153(4) EPC

(43) Date of publication:
**23.04.2008 Bulletin 2008/17**

(51) Int Cl.:
*C07C 5/27* (2006.01)     *B01J 23/40* (2006.01)
*B01J 21/04* (2006.01)     *B01J 21/06* (2006.01)
*B01J 23/84* (2006.01)     *B01J 27/053* (2006.01)

(21) Application number: **06843944.7**

(22) Date of filing: **19.06.2006**

(86) International application number:
**PCT/RU2006/000318**

(87) International publication number:
**WO 2008/002171 (03.01.2008 Gazette 2008/01)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicants:
• **Otkrytoe Aktsionernoe Obschestvo "Nauchno-Proizvodstvennoe Predpriyatie Neftekhim"**
  **Krasnodar 350007 (RU)**
• **Shakun, Aleksandr Nikitovich**
  **Krasnodar 350080 (RU)**

• **Fedorova, Marina Leonidovna**
  **Krasnodar 350080 (RU)**

(72) Inventors:
• **SHAKUN, Aleksandr Nikitovich**
  **Krasnodar 350080 (RU)**
• **FEDOROVA, Marina Leonidovna**
  **Krasnodar 350080 (RU)**

(74) Representative: **Srinivasan, Ravi Chandran**
  **J.A. Kemp & Co.**
  **14 South Square**
  **Gray's Inn**
  **London WC1R 5JJ (GB)**

(54) **METHOD FOR ISOMERISING LIGHT GASOLINE FRACTIONS**

(57)     The invention relates to isomerization of light gasoline fractions to produce a high octane gasoline component, and may be used in oil refining and petrochemical industries.

Isomerization is conducted at a temperature of 100-220°C, pressure - 1.0-3.5 MPa, hydrogen:raw material mole ratio=(0.3-10):1, using a catalyst having the following composition, mass-%:

| | |
|---|---|
| Group 8A metal | 0.1-0.8 |
| sulphuric acid ion | 4-15 |
| composition of metal oxides | to 100 |

As the metal of Group 8A platinum and/or palladium, and/or iridium, and/or rhodium, and/or ruthenium are used, and the composition of metal oxides is as follows:

$$xFe_2O_3 \cdot yMnO_2 \cdot zTiO_2 \cdot nAl_2O_3 \cdot mZrO_2,$$

with the following mole coefficient values:

$$x = (0.06 - 3.6) \cdot 10^{-3};$$

$$y = (0.11 - 2.3) \cdot 10^{-3};$$

$$z = (0.12 - 2.5) \cdot 10^{-3};$$

$$n = (7.8 - 21.5) \cdot 10^{-2};$$

$$m = (63.3 - 74.7) \cdot 10^{-2}.$$

**Description**

The invention relates to isomerization of light gasoline fractions to produce a high octane gasoline component, and may be used in oil-refining and petrochemical industries.

There are known a method for producing a catalyst useful in hydrocarbon isomerization, a catalyst produced by this method and use thereof (Patent RU N° 2 191 627, IPC7 B01J 31/44, 1996). A raw material being isomerized is contacted with a catalyst which is a noble metal selected from platinum, palladium, ruthenium, osmium or iridium on an alumina support, containing up to 20 mass-% of such active components as silicon and titanium dioxides, magnesium or zirconium oxide. The alumina is pre-treated with an aluminium halide compound having a hydrocarbon substituent. The catalyst may be promoted with tin, lead, germanium, bismuth, cobalt, nickel, indium, zinc, uranium, thallium, zirconium or mixtures thereof. Isomerization is conducted at a temperature of 100-200°C in the presence of hydrogen, where hydrogen: raw material mole ratio is 0.01-5. A gas-raw material mixture is fed on a fixed-bed catalyst under a pressure of 0.2-4.0 MPa.

The disadvantage of this method is low stability of isomerization (concentration of the most branched isomer 2,2-dimethylbutane (2,2-DMB) in the mixture of all hexane isomers decreases after 200 hours of operation from 28 mass-% to 14 mass-%).

Known is a layered catalyst for paraffin isomerization (EP № 1 002 579, IPC7 B01J 37/02, 1998), a top layer of which comprises platinum in the amount of 0.05-10 mass-%. A catalyst core is a zirconium oxide or a mixture of zirconium and aluminium oxides, containing 0.5-5 mass-% of sulfur. An intermediate layer comprises one of the following metals: Ti, V, Cr, Mn, Fe, Co, Ni, Cu, Zn, preferably Mn, Fe, Ni, in the amount of 0.05-2 mass-%. An atomic ratio of the intermediate layer metal to the top layer metal is more than 3. Isomerization process is conducted at a temperature of 100-200°C and pressure of 0.03-4 MPa, in the presence of hydrogen (hydrogen:feedstock mole ratio is 0.05-5:1).

The disadvantage of this process of isomerization of light gasoline fractions is low stability of isomerization (concentration of the most branched isomer 2,2-DMB in the mixture of all hexane isomers decreases after 200 hours of operation from 28 mass-% to 20 mass-%).

The most similar method is isomerization of light gasoline fractions at a temperature of 170-270°C and pressure of 0.8-4.0 MPa, with hydrogen:raw material mole ratio equal to (0.2-10) :1, with the use of a catalyst for isomerization of light paraffin $C_4$-$C_6$ hydrocarbons (Patent RU № 2 171 713, IPC7 B01J 23/40, 2000) containing 0.2-1.0 mass-% platinum or palladium, 0.05-2.5 mass-% chlorine and 0.5-10 mass-% sulfate-ion, which are deposited on a mixture of aluminium and zirconium oxides. The aluminium oxide being pre-promoted with titanium and manganese used in the following mass ratios $TiO:Al_2O_3$=0.005-0.05 and $MnO_2:Al_2O_3$=0.001-0.05

The disadvantage of this method is low stability of isomerization (concentration of the most branched 2,2-DMB isomer in the mixture of all hexane isomers decreases after 200 hours of operation from 34 mass-% to 25 mass-%).

The proposed method of isomerization of light gasoline fractions provides a high stability of isomerization.

The method of isomerization of light gasoline fractions is carried out by contacting a raw material with a catalyst containing the following composition of metal oxides: $xFe_2O_3 \cdot yMnO_2 \cdot zTiO_2 \cdot nAl_2O_3 \cdot mZrO_2$, with a hydrogenating component and an oxygen-containing sulphur ion applied thereon, wherein mole coefficients in the composition of oxides are as follows:

$$x=(0.06-3.6) \cdot 10^{-3}; \quad y=(0.11-2.3) \cdot 10^{-3}; \quad z=(0.12-2.5) \cdot 10^{-3};$$

$$n=(7.8-21.5) \cdot 10^{-2}; \quad m=(63.3-74.7) \cdot 10^{-2},$$

and a mass ratio of sulphur ion to metal composition is 0.042-0.178.

As the hydrogenating component of the catalyst use is made of a Group 8A metal: platinum and/or palladium, and/or iridium, and/or rhodium, and/or ruthenium, and as the oxygen-containing sulphur ion - a sulphuric acid ion, with the following mass ratio of catalyst components:

| | |
|---|---|
| Group 8A metal | 0.1-0.8 |
| sulphuric acid ion | 4-15 |
| metal compositions | to 100 |

The process is conducted at a temperature of 100-220°C and pressure of 1.0-3.5 MPa, using hydrogen: raw material mole ratio=(0.3-10):1.

Mode of carrying out isomerization process.

A raw material (pentane-hexane fraction) is mixed with a hydrogen-containing gas, maintaining the hydrogen: raw material mole ratio equal to (0.3-10):1. Further, the gas-raw material mixture is heated and supplied to a reactor, where it is brought into contact with the above described catalyst (hourly space velocity 0.5-4 $hr^{-1}$). In the reactor, isomerization of paraffin hydrocarbons $C_5$-$C_6$, hydrogenation of unsaturated and aromatic compounds and partial cracking of hydrocarbons with $C_1$-$C_4$ gases formation take place.

Catalyst preparation.

A composition of metal oxides is prepared by mixing iron, manganese, titanium, zirconium and aluminium hydroxides, maintaining the required mole ratio of oxides, with the following extrusion, drying and calcination at a temperature of 500-900°C.

The obtained composition of metal oxides is impregnated with platinum and/or palladium, and/or iridium, and/or rhodium, and/or ruthenium compound solutions. To provide the required ratio of an oxygen-containing sulphur ion to a composition of oxides a sulphuric acid is added to the impregnating solution. After the impregnation is complete the catalyst is calcinated at a temperature of 400-700°C.

For illustration of this method experiments were carried out for which a continuous flow pilot plant was used.

A catalyst charge was 4 $cm^3$. Isomerization process was conducted using a temperature range of 100-220°C, pressure 1.0-3.5 MPa, hourly space velocity (V) 0.5-4.0 $hr^{-1}$ and a mole ratio of hydrogen:raw material=(0.3-10):1 (Q). As the raw material a hydrofined straight run HK-70°C gasoline fraction was used, having octane number as determined by F-2 method - 67 items of the composition, mass-%:

| | |
|---|---|
| isobutane | 0.01 |
| n-butane | 0,31 |
| isopentane | 15.41 |
| n-pentane | 34.03 |
| cyclopentane | 4.20 |
| 2,2-dimethylbutane | 0.51 |
| 2,3-dimethylbutane | 1.45 |
| 2-methylpentane | 14.55 |
| 3-methylpentane | 7.81 |
| n-hexane | 14.92 |
| methylcyclopentane | 5.00 |
| cyclohexane | 0.47 |
| benzene | 1.22 |
| total of $C_7$ hydrocarbons | 0.11 |
| Impurities, ppm sulphur | 0.5 |
| water | 10 |
| chlorine | 1.0 |
| nitrogen | 0.5 |

The reaction products were analyzed by flow gas-liquid chromatography using an OV-101 capillary column with a liquid phase.

Degree of isomerization was assessed by 2,2-DMB proportion in the total amount of hexane isomers.

Example 1

Raw material is mixed with hydrogen in a mole ratio of hydrogen to starting material = 5, heated to 150°C and at a hourly space velocity of 2 $hr^{-1}$ and under a pressure of 2.8 MPa is supplied to a reactor filled with a catalyst having the following composition, mass-%:

| | |
|---|---|
| platinum | 0.3 |
| sulphuric acid ion | 9.2 |
| composition of oxides | 90.5 |

Mole coefficient values in the composition of oxides and a mass ratio of sulphuric acid ion to composition of oxides are provided in Table 1.

Conditions under which the process is carried out and results are provided in Table 2.

Example 2

Isomerization process is carried out similarly to that as described in Example 1, except that feed space velocity is 0.5 hr$^{-1}$, hydrogen:raw material mole ratio is 0.3 and the process is carried out under a pressure of 3.5 MPa and at a temperature of 100°C, using a catalyst having the following composition, mass-%:

| | |
|---|---|
| palladium | 0.8 |
| sulphuric acid ion | 15.0 |
| composition of oxides | 84.2 |

Mole coefficient values in the composition of oxides and a mass ratio of sulphuric acid ion to composition of oxides are provided in Table 1.

Conditions under which the process is carried out and results are provided in Table 2.

Example 3

Isomerization process is carried out similarly to that as described in Example 1, except that feed space velocity is 4.0 hr$^{-1}$, hydrogen:raw material mole ratio is 10 and the process is carried out under a pressure of 1.0 MPa and at a temperature of 220°C, using a catalyst having the following composition, mass-%:

| | |
|---|---|
| iridium | 0.6 |
| sulphuric acid ion | 15.0 |
| composition of oxides | 84.4 |

Mole coefficient values in the composition of oxides and a mass ratio of sulphuric acid ion to composition of oxides are provided in Table 1.

Conditions under which the process is carried out and results are provided in Table 2.

Example 4

Isomerization process is carried out similarly to that as described in Example 1, except that feed space velocity is 0.5 hr$^{-1}$, hydrogen:raw material mole ratio is 0.3 and the process is carried out under a pressure of 3.5 MPa and at a temperature of 100°C, using a catalyst having the following composition, mass-%:

| | |
|---|---|
| rhodium | 0.8 |
| sulphuric acid ion | 15.0 |
| oxides composition | 84.2 |

Mole coefficient values in the composition of oxides and a mass ratio of sulphuric acid ion to composition of oxides are provided in Table 1.

Conditions under which the process is carried out and results are provided in Table 2.

Example 5

Isomerization process is carried out similarly to that as described in Example 1, using a catalyst having the following composition, mass-%:

| | |
|---|---|
| ruthenium | 0.8 |
| sulphuric acid ion | 15.0 |
| composition of oxides | 84.2 |

Mole coefficient values in the composition of oxides and a mass ratio of sulphuric acid ion to composition of oxides are provided in Table 1.

Conditions under which the process is carried out and results are provided in Table 2.

Example 6

Isomerization process is carried out similarly to that as described in Example 1, using a catalyst having the following composition, mass-%:

| | |
|---|---|
| platinum | 0.2 |
| palladium | 0.2 |
| sulphuric acid ion | 4.0 |
| composition of oxides | 95.6 |

Mole coefficient values in the composition of oxides and a mass ratio of sulphuric acid ion to composition of oxides are provided in Table 1.

Conditions under which the process is carried out and results are provided in Table 2.

Example 7

Isomerization process is carried out similarly to that as described in Example 1, using a catalyst having the following composition, mass-%:

| | |
|---|---|
| platinum | 0.2 |
| iridium | 0.3 |
| sulphuric acid ion | 8.6 |
| composition of oxides | 90.9 |

Mole coefficient values in the composition of oxides and a mass ratio of sulphuric acid ion to composition of oxides are provided in Table 1.

Conditions under which the process is carried out and results are provided in Table 2.

Example 8

Isomerization process is carried out similarly to that as described in Example 1, using a catalyst having the following composition, mass-%:

| | |
|---|---|
| platinum | 0.2 |
| rhodium | 0.4 |
| sulphuric acid ion | 9.5 |
| composition of oxides | 89.9 |

Mole coefficient values in the composition of oxides and a weight ratio of sulphuric acid ion to composition of oxides are provided in Table 1.

Conditions under which the process is carried out and results are provided in Table 2.

Example 9

Isomerization process is carried out similarly to that as described in Example 1, using a catalyst having the following composition, mass-%:

| | |
|---|---|
| platinum | 0.2 |
| ruthenium | 0.5 |
| sulphuric acid ion | 7.5 |
| composition of oxides | 91.8 |

Mole coefficient values in the composition of oxides and a mass ratio of sulphuric acid ion to composition of oxides are provided in Table 1.

Conditions under which the process is carried out and results are provided in Table 2.

Example 10

Isomerization process is carried out similarly to that as described in Example 1, using a catalyst having the following composition, mass-%:

| | |
|---|---|
| platinum | 0.1 |
| sulphuric acid ion | 15.0 |
| composition of oxides | 84.9 |

Mole coefficient values in the composition of oxides and a mass ratio of sulphuric acid ion to composition of oxides are provided in Table 1.

Conditions under which the process is carried out and results are provided in Table 2.

Example 11 (comparative)

Isomerization process is carried out similarly to that as described in Example 1, using a catalyst having the following composition, mass-%:

| | |
|---|---|
| platinum | 0.3 |
| sulphuric acid ion | 9.2 |
| composition of oxides | 90.5 |

Mole coefficient values in the composition of oxides and a mass ratio of sulphuric acid ion to composition of oxides are provided in Table 1.

Conditions under which the process is carried out and results are provided in Table 2.

Isomerization process in comparative examples 12-20 is carried out similarly to that as described in Example 11.

Mole coefficient values in the composition of oxides and a mass ratio of sulphuric acid ion to composition of oxides are provided in Table 1.

Conditions under which the process is carried out and results are provided in Table 2.

Example 21 (comparative)

Isomerization process is carried out similarly to that as described in Example 1, using a catalyst having the following composition, mass-%:

| | |
|---|---|
| platinum | 0.3 |
| sulphuric acid ion | 3.8 |
| composition of oxides | 95.9 |

Mole coefficient values in the composition of oxides and a mass ratio of sulphuric acid ion to composition of oxides are provided in Table 1.

Conditions under which the process is carried out and results are provided in Table 2.

Example 22 (comparative)

Isomerization process is carried out similarly to that as described in Example 1, using a catalyst having the following composition, mass-%:

| | |
|---|---|
| platinum | 0.3 |
| sulphuric acid ion | 15.2 |
| composition of oxides | 84.5 |

Mole coefficient values in the composition of oxides and a mass ratio of sulphuric acid ion to composition of oxides are provided in Table 1.

Conditions under which the process is carried out and results are provided in Table 2.

The results which were obtained show high stability of the process of isomerization of light gasoline fractions (Ex. 1-10).

However, these results can be obtained only with the claimed metal oxide mole coefficients in the composition and the claimed ratio of oxygen-containing sulphur ion to composition of metal oxides.

Thus, with lowering mole coefficients of iron (ex. No.11), manganese (ex. No.13), titanium (ex. No.15), zirconium (ex. No.19) and aluminium (ex. No.17) oxides 2,2-DMB proportion in the total amount of $C_6$ isomers decreases after 200 hours of operation by 17.9-21.1%.

Increasing mole coefficients of iron (ex. No.12), manganese (ex. No.14), titanium (ex. No.16), aluminium (ex. No.18) and zirconium (ex. No.20) oxides above the claimed value decreases stability of isomerization process by 18.8-24.6%.

As to a mass ratio of oxygen-containing sulphur ion to composition of metal oxides, both in the cases of this value decrease (ex. No.21) or its increase (ex. No.22) with respect to the claimed range 2,2-DMB proportion in the total amount of $C_6$ isomers falls by 23-24%.

Catalyst characteristics

| Example No. | Oxide mole coefficients | | | | | Ratio of sulphuric acid ion to composition of oxides |
|---|---|---|---|---|---|---|
| | $x \cdot 10^3$ | $y \cdot 10^3$ | $z \cdot 10^3$ | $n \cdot 10^2$ | $m \cdot 10^2$ | |
| 1 | 1,83 | 1,2 | 1,31 | 14,65 | 68,85 | 0,102 |
| 2 | 0,06 | 1,2 | 1,31 | 14,65 | 68,8 | 0,178 |
| 3 | 3,6 | 1,2 | 1,31 | 14,65 | 68,8 | 0,178 |
| 4 | 1,83 | 0,11 | 1,31 | 14,65 | 68,8 | 0,178 |
| 5 | 1,83 | 1,2 | 1,31 | 21,5 | 63,3 | 0,042 |
| 6 | 1,83 | 2,3 | 1,31 | 14,65 | 68,8 | 0,095 |
| 7 | 1,83 | 1,2 | 0,12 | 14,65 | 68,8 | 0,106 |
| 8 | 1, 83 | 1,2 | 2,5 | 14,65 | 68,8 | 0,082 |
| 9 | 1,83 | 1,2 | 1,31 | 7,8 | 74,7 | 0,178 |
| 10 | 1,83 | 1,2 | 1,31 | 14,65 | 68,8 | 0,102 |
| 11 comp. | 0,05 | 1,2 | 1,31 | 14,65 | 68,8 | 0,102 |
| 12 comp. | 3,8 | 1,2 | 1,31 | 14,6 | 68,8 | 0,102 |
| 13 comp. | 1,83 | 0,09 | 1,31 | 14,65 | 68,8 | 0,102 |
| 14 comp. | 1,83 | 2,5 | 1,31 | 14,65 | 68,8 | 0,102 |
| 15 comp. | 1,83 | 1,2 | 0,1 | 14,65 | 68,8 | 0,102 |
| 16 comp. | 1,83 | 1,2 | 2,7 | 14,65 | 68,8 | 0,102 |
| 17 comp. | 1,83 | 1,2 | 1,31 | 7,5 | 68,8 | 0,102 |
| 18 comp . | 1, 83 | 1,2 | 1,31 | 21,8 | 68,8 | 0,102 |
| 19 comp . | 1,83 | 1,2 | 1,31 | 14,65 | 62,5 | 0,102 |
| 20 comp. | 1,83 | 1,2 | 1,31 | 14,65 | 75,4 | 0,102 |
| 21 comp. | 1, 83 | 1,2 | 1,31 | 14,65 | 68,8 | 0,04 |
| 22 comp. | 1,83 | 1,2 | 1,31 | 14,65 | 68,8 | 0,18 |

Table 2 Conditions of carrying out the process and results thereof

| Example No. | Process parameters | | | | 2,2-DMB proportion in the total amount of hexane isomers, mass-% | |
|---|---|---|---|---|---|---|
| | T, °C | P, MPa | V, hour$^{-1}$ | Q | after 40 hours | after 200 hours |
| 1 | 150 | 2,8 | 2,0 | 5,0 | 35,1 | 35,2 |
| 2 | 100 | 3,5 | 0,5 | 0,3 | 34,5 | 34,5 |
| 3 | 220 | 1,0 | 4,0 | 10,0 | 34,4 | 34,3 |
| 4 | 100 | 3,5 | 0,5 | 0,3 | 34,3 | 34,4 |
| 5 | 150 | 2,8 | 2,0 | 5,0 | 35,1 | 34,9 |
| 6 | 150 | 2,8 | 2,0 | 5,0 | 35,1 | 35,0 |
| 7 | 150 | 2,8 | 2,0 | 5,0 | 35,2 | 35,2 |
| 8 | 150 | 2,8 | 2,0 | 5,0 | 35,4 | 35,3 |
| 9 | 150 | 2,8 | 2,0 | 5,0 | 35,3 | 35,3 |
| 10 | 150 | 2,8 | 2,0 | 5,0 | 35,2 | 35,1 |
| 11 comp. | 150 | 2,8 | 2,0 | 5,0 | 30,1 | 24,7 |
| 12 comp. | 150 | 2,8 | 2,0 | 5,0 | 34,5 | 28,0 |
| 13 comp. | 150 | 2,8 | 2,0 | 5,0 | 29,2 | 23,6 |
| 14 comp. | 150 | 2,8 | 2,0 | 5,0 | 34,6 | 26,1 |
| 15 comp. | 150 | 2,8 | 2,0 | 5,0 | 29,6 | 24,1 |
| 16 comp. | 150 | 2,8 | 2,0 | 5,0 | 34,7 | 26,9 |
| 17 comp. | 150 | 2,8 | 2,0 | 5,0 | 34,8 | 27,8 |
| 18 comp. | 150 | 2,8 | 2,0 | 5,0 | 34,6 | 27,3 |
| 19 comp. | 150 | 2,8 | 2,0 | 5,0 | 34,5 | 28,3 |
| 20 comp. | 150 | 2,8 | 2,0 | 5,0 | 36,1 | 26,6 |
| 21 comp. | 150 | 2,8 | 2,0 | 5,0 | 20,9 | 16,1 |
| 22 comp. | 150 | 2,8 | 2,0 | 5,0 | 34,9 | 26,5 |

**Claims**

1. A method of isomerization of light gasoline fractions by contacting a raw material with a catalyst containing a hydrogenating component, Group 3B, 4A, 7A and 8A metal oxides and an oxygen-containing sulphur ion, at elevated temperature and pressure, in the presence of hydrogen, **characterized in that** as the oxide component the catalyst contains the following composition of metal oxides:

$$xFe_2O_3 \cdot yMnO_2 \cdot zTiO_2 \cdot nAl_2O_3 \cdot mZrO_2,$$

with the following mole coefficient values:

$$x = (0.06 - 3.6) \cdot 10^{-3};$$

$$y=(0.11-2.3)\cdot 10^{-3};$$

$$z=(0.12-2.5)\cdot 10^{-3};$$

$$n=(7.8-21.5)\cdot 10^{-2};$$

$$m=(63.3-74.7)\cdot 10^{-2},$$

and a mass ratio of said oxygen-containing sulphur ion to said composition of metal oxides is 0.042-0.178.

2. A method of isomerization of light gasoline fractions according to claim 1, **characterized in that** as the hydrogenating component of the catalyst use is made of Group 8A metal: platinum and/or palladium, and/or iridium, and/or rhodium, and/or ruthenium.

3. A method of isomerization of light gasoline fractions according to claim 2, **characterized in that** as the oxygen-containing sulphur,ion use is made of a sulphuric acid ion.

4. A method of isomerization of light gasoline fractions according to claim 3, **characterized in that** the mass ratio of the catalyst components is as follows:

| | |
|---|---|
| Group 8A metal | 0.1-0.8 |
| sulphuric acid ion | 4-15 |
| composition of metal oxides | to 100 |

5. A method of isomerization of light gasoline fractions according to claim 1, **characterized in that** the process is conducted at a temperature of 100-220°C and pressure of 1.0-3.5 MPa, with hydrogen:raw material mole ratio of (0.3-10):1.

## INTERNATIONAL SEARCH REPORT

| | |
|---|---|
| | International application No. |
| | PCT/RU 2006/000318 |

| A. CLASSIFICATION OF SUBJECT MATTER | *C07C 5/27* *(2006.01)* | *B01J 21/06* *(2006.01)* |
|---|---|---|
| | *B01J 23/40* *(2006.01)* | *B01J 23/84* *(2006.01)* |
| | *B01J 21/04* *(2006.01)* | *B01J 27/053* *(2006.01)* |

According to International Patent Classification (IPC) or to both national classification and IPC

**B. FIELDS SEARCHED**

Minimum documentation searched (classification system followed by classification symbols)

C07C 5/27, B01J 23/40, 21/04, 21/06, 23/84, 27/053

Documentation searched other than minimum documentation to the extent that such documents are included in the fields searched

Electronic data base consulted during the international search (name of data base and, where practicable, search terms used)

PAJ, Esp@cenet, DWPI, USPTO, CIPO, SIPO

**C. DOCUMENTS CONSIDERED TO BE RELEVANT**

| Category* | Citation of document, with indication, where appropriate, of the relevant passages | Relevant to claim No. |
|---|---|---|
| A | RU 2171713 C1 (OTKRYTOE AKTSIONERNOE OBSCHESTVO "NAUCHNO-PROIZVODSTVENNOE PREDPRIYATIE NEFTEKHIM") 10.08.2001 | 1-5 |
| A | RU 2171827 C1 (OTKRYTOE AKTSIONERNOE OBSCHESTVO "NAUCHNO-PROIZVODSTVENNOE PREDPRIYATIE NEFTEKHIM") 10.08.2001 | 1-5 |
| A | US 6495733 B1 (AGIP PETROLI S.P.A. et al.) 17.12.2002 | 1-5 |
| A | JP 2001179105 A (PETROLEUM ENERGY CENTER FOUND et al.) 03.07.2001 | 1-5 |
| A | EP 1002579 A1 (UOP) 24.05.2000 | 1-5 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 February 2007 | 01 March 2007 |

| Name and mailing address of the ISA/ | Authorized officer |
|---|---|
| **RU** | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2191627
- EP 1002579 A
- RU 2171713